# EUROPEAN PATENT APPLICATION

(11) **EP 2 597 606 A1**
(43) Date of publication of application: **29.05.2013**
(21) Application number: 11190184.9
(22) Date of filing: 22.11.2011
(51) Int. Cl.: G06Q 30/00

(54) **Systems and methods for managing user data**

(71) Applicant: Yap, Sebastian Chon Lin, Singapore 279090 (SG)
(72) Inventor: Yap, Sebastian Chon Lin, Singapore 279090 (SG)
(74) Representative: Needle, Jacqueline

(57) **Abstract**

A system for managing user data in an online environment includes a processor (20), a memory (40), and input/output device (40) and a number of remote computers (60, 70, 80) connected to the processor (20) by way of a network (50). The processor (20) controls and manages various processes. It receives (s1) a plurality of user data from a plurality of users. The user data is stored (s2) in memory. A category is assigned (s3) to each user data. The plurality of user data is provided (s4) to a plurality of rankers. The processor receives (s5) the rankings for the user data from the rankers. The rankings are stored (s6) in the memory. Then a value is assigned (s7) to each user data based on the rankings and categories. These values are stored (s8) in memory.

## Description

The present disclosure generally relates to systems and methods related to managing user data, and more specifically to systems and methods for presenting, reviewing, ranking, valuing and/or exchanging user data of user submitted intellectual portfolios.

It has been a longstanding practice to present ideas to one's peers in order to receive feedback related to those ideas. The feedback may be in the form of critique or improvements. The presentation/feedback process has traditionally been conducted on a one-to-one basis. It has also been a longstanding practice to present ideas to investors and/or recruiters in order to receive funding and/or seek employment positions. Again, the presentation process has traditionally been conducted on a one-to-one basis. It has further been a longstanding practice to present products to individual potential buyers in order to sell those products. Yet again, the presentation process has traditionally been conducted on a one-to-one basis. It has still yet further been a longstanding practice to present problems to individual thinkers in order to arrive at solutions. Still yet again, the problem/solution process has traditionally been conducted on a one-to-one basis. These old-fashioned practices are time consuming and not cost effective. These practices also require these processes to separately occur.

The description herein of problems and disadvantages of known apparatuses, methods, and devices is not intended to limit the invention to the exclusion of these known entities. Indeed, embodiments of the invention may include, as a part of the embodiment, portions or all of one or more of the known apparatus, methods, and devices without suffering from the disadvantages and problems noted herein. This disclosure describes an improvement over these prior art technologies.

Systems and methods for managing user data in an online environment are disclosed. The systems and methods consolidate to prior practices in a novel and unique platform.

According to the present invention there is provided a method for valuing user data, comprising the steps of receiving, by a processor, a plurality of user data from a plurality of users; storing, by the processor in a memory, the user data; assigning a category to each user data; providing, by the processor, the plurality of user data to a plurality of rankers; receiving, by the processor, rankings for the user data from the rankers; storing, by the processor in the memory, the rankings; assigning, by the processor, a value to each user data based on the rankings and categories and/or subcategories; and storing, by the processor in the memory, the values.

In an embodiment, the step of assigning a value to the user data comprises:
for each user:
   grouping the user data for the user into assigned categories;
   ordering the user data in each category based on the ranking of the user data;
   assigning increasing values to each user data based on the ordering; and
   repeating for the user the ordering and assigning steps for each category.

Preferably, the method further comprises:
determining if an actual value of a user data in a category exists in the memory;
if an actual value of a user data does not exist:
   requesting users to assign a value to a top ranked user data in a category;
   averaging assigned values to obtain an average value; and
   using the average value and the rankings to scale the values of the user data in the category;
if one actual value exists:
   using the one actual value and the scale of values computed before the actual value existed to re-scale the values of the user data in the category; and
if more than one actual values exist:
   averaging the more than one actual values to obtain a average actual value; and
   using the average actual value and the rankings to scale the values of the user data in the category.

For example, the method further comprises:
retrieving an actual values of user data in a category from the memory; and
determining actual value for a user data without an actual value based on the actual values of user data retrieved from the memory and the rankings of user data of the user data without a value.

Preferably, the method further comprises assigning a net worth to each user based on a total value of the user data for the user.

The method may further comprise:
retrieving an actual net worth of users from the memory; and
determining an actual net worth for a user without an actual net worth based on the actual net worth of users retrieved from the memory and the rankings of user data of the user without a net worth.

In an embodiment, the ranking further comprises receiving an indication that a ranker has chosen to recognize the user data.

In an embodiment, the category may include subcategories.

Preferably, the method further comprises:
comparing a first user data to a second user data; and
determining if the first user data and the second user data are similar.

The comparison may be based on a comparison of at least one of a keyword, phrase, diagram, chart and picture of the first user data and of the second user data.

The method may further comprise:
if the first user data and the second user data are determined to not be similar, the method further comprises placing the first user data and the second user data on an active user data list; and
if the first user data and the second user data are determined to be similar, the method further comprises:
   a) determining a submission date for the first user data and the second user data;
   b) informing a user of the later submitted user data that the later submitted user data requires differentiation from the earlier submitted user data;
   c) determining if the later submitted user data has been revised;
   d) if the later submitted user data has been revised, determining if the revised user data is similar to the earlier submitted user data and returning to step b) if the later submitted user data is similar to the earlier submitted user data; and
   e) if the later submitted user data has not been revised, placing the later submitted user data on a dormant user data list.

If the user data is similar, the method may comprise notifying a user of the first user data and a user of the second user data that the first user data is similar to the second user data.

In an embodiment, the method further comprises:
receiving an analysis of a user data of a user from an analyzer; and
transmitting the analysis of the user data to the user.

Preferably, the method further comprises:
receiving a search term from a search requester;
conducting a search of the plurality of user data for user data satisfying the search term; and
providing search results to the search requester.

Preferably, the method further comprises:
receiving by the processor from bidders bids for a user data of a user; and
forwarding by the processor the bids to the user of the user data.

For example, the method may comprise:
receiving by the processor from other users feedback regarding the bids; and
forwarding by the processor the feedback to the user of the user data.

In an embodiment, a system may be provided for purchasing a user data from a user.

The purchase may be based on a trade of one user data of a first user for another user data of a second user. In addition and/or alternatively, the purchase may include additional compensation to account for a difference in a value of the first user data and the second user data.

In an embodiment, a user data may have been created based on a submitted request for user data.

The method may further comprise:
presenting by the processor the user data to a plurality of users;
receiving by the processor from the plurality of users solution rankings of the user data; and
ranking by the processor the user data based on the solution rankings.

Preferably, the ranking is based on at least one of practicality and ingenuity of the solution.

The ranking may further comprise receiving an indication that a ranker has chosen to recognize the solution.

In an embodiment, the user data is at least one of a process, machine, manufacture, composition of matter, literary work, musical work, dramatic work, pantomime, choreographic work, pictorial, graphic, sculptural work, motion picture, audiovisual work, sound recording, and architectural work.

Preferably, the method further comprises providing by the processor online collaboration for developing user data by multiple users.

The method may further comprise tracking amounts of contribution of each of multiple users.

In an embodiment, the method further comprises:
modifying a user data a first user by a second user; and
starting a biding process for the user data and the modified user data between the first and second users.

In an embodiment, methods as defined may further comprise:
receiving feedback relating to user data;
forwarding the feedback to a user of the user data;
displaying the feedback to other users;
receiving ranking of the feedback from the other users; and
displaying the feedback based on the rankings of the feedback.

In an embodiment, methods as defined may further comprise:
modifying an original user data of a first user by a second user, said original user data having an original value;
determining a modified value of the modified user data; and
determining a value of the modified user data attributable to the second user based on the difference between the original value and the modified value.

The present invention also extends to a system for valuing user data, comprising:
a processor arranged to receive a plurality of user data from a plurality of users, store the user data, assign a category to each user data, provide the plurality of user data to a plurality of rankers, receive rankings for the user data from the rankers, store the rankings, assign a value to each user data based on the rankings and categories, and store the values; and
a memory for storing the user data, the rankings and the values.

In an embodiment, when the processor is arranged to assign a value to the user data, for each user the processor is further arranged to group the user data for the user into assigned categories, order the user data in each category based on the ranking of the user data, assign increasing values to each user data based on the ordering, and repeat for the user the ordering and assigning steps for each category.

Preferably, the processor is further arranged to:
determine if an actual value of a user data in a category exists in the memory;
if an actual value of a user data does not exist:
   request users to assign a value to a top ranked user data in a category;
   average assigned values to obtain an average value; and
   use the average value and the rankings to scale the values of the user data in the category;
if one actual value exists:
   use the one actual value and the scale of values computed before the actual value existed to re-scale the values of the user data in the category; and
if more than one actual values exist:
   average the more than one actual values to obtain a average actual value; and
   use the average actual value and the rankings to scale the values of the user data in the category.

The processor may also be arranged to retrieve actual values of user data in a category from the memory, and determine an actual value for a user data without an actual value based on the actual values of user data retrieved from the memory and the rankings of user data of the user data without a value.

Preferably, the processor is arranged to assign a net worth to each user based on a total value of the user data for the user.

In an embodiment, the processor is arranged to retrieve an actual net worth of users from the memory and determine an actual net worth for a user without an actual net worth based on the actual net worth of users retrieved from the memory and the rankings of user data of the user without a net worth.

The processor may be arranged to receive an indication that a ranker has chosen to recognize the user data.

Preferably, the category can include subcategories.

In an embodiment, the processor is arranged to compare a first user data to a second user data, and determine if the first user data is similar to the second user data.

Preferably, the comparison is based on a comparison of at least one of a keyword, phrase, diagram, chart and picture of the first user data and of the second user data.

If the user data is similar, the processor is arranged to:
if the first user data and the second user data are determined to not be similar, place the first user data and the second user data on an active user data list; and
if the first user data and the second user data are determined to be similar, the processor is further configured to:
   a) determine a submission date for the first user data and the second user data;
   b) inform a user of the later submitted user data that the later submitted user data requires differentiation from the earlier submitted user data;
   c) determine if the later submitted user data has been revised;
   d) if the later submitted user data has been revised, determine if the revised user data is similar to the earlier submitted user data and return to b) if the later submitted user data is similar to the earlier submitted user data; and
   e) if the later submitted user data has not been revised, place the later submitted user data on a dormant user data list.

If the user data is similar, the processor is arranged to notify a user of the first user data and a user of the second user data that the first user data is similar to the second user data.

In an embodiment, the processor is arranged to receive an analysis of a user data of a user from an analyzer, and transmit the analysis of the user data to the user.

Preferably, the processor is arranged to receive a search term from a search requester, conduct a search of the plurality of user data for user data satisfying the search term, and provide search results to the search requester.

The processor may also be arranged to receive from bidders bids for a user data of a user, and forward the bids to the user of the user data.

The processor may also be arranged to receive from other users feedback regarding the bids, and forward the feedback to the user of the user data.

In an embodiment, the processor is arranged to provide a system for purchasing a user data from a user.

The purchase may be based on a trade of one user data of a first user for another user data of a second user. Additionally and/or alternatively, the purchase may include additional compensation to account for the difference in the value of the first user data and the second user data.

A user data may have been created based on a submitted request for user data.

Preferably, the processor is further arranged to present the user data to a plurality of users, receive from the plurality of user's solution rankings of the user data, and rank the user data based on the solution rankings.

Preferably, the ranking is based upon at least one of practicality and ingenuity of the solution.

In an embodiment, the processor is arranged to receive an indication that a ranker has chosen to recognize the solution.

The user data may be at least one of a process, machine, manufacture, composition of matter, literary work, musical work, dramatic work, pantomime, choreographic work, pictorial, graphic, sculptural work, motion picture, audiovisual work, sound recording, and architectural work.

Preferably, the processor is arranged to provide online collaboration for developing user data by multiple users.

In a system as defined above, the processor may be arranged to track amounts of contribution of each of multiple users.

In an embodiment, the processor is arranged to modify a user data of a first user by a second user, and start a biding process for the user data and the modified user data between the first and second users.

Systems as defined may comprise a processor arranged to:
receive feedback relating to user data;
forward the feedback to a user of the user data;
display the feedback to other users;
receive ranking of the feedback from the other users; and
display the feedback based on the rankings of the feedback.

Systems as defined may comprise a processor arranged to:
modify an original user data of a first user by a second user, said original user data having an original value;
determine a modified value of the modified user data; and
determine a value of the modified user data attributable to the second user based on the difference between the original value and the modified value.

According to a further aspect of the invention there is provided a computer program device readable by a machine, and carrying instructions executable by the machine to perform method steps of:
receiving a plurality of user data from a plurality of users;
storing the user data;
assigning a category to each user data;
providing the plurality of user data to a plurality of rankers;
receiving rankings for the user data from the rankers;
storing the rankings;
assigning a value to each user data based on the rankings and categories; and
storing the values.

Embodiments of the present invention will hereinafter be described, by way of example, with reference to the accompanying drawings, in which:
FIG. 1 is a block diagram of an embodiment of a system for managing user data;
FIG. 2 is a flow diagram illustrating a process for valuing user data;
FIG. 3 is a flow diagram illustrating a process for assigning a real world net worth;
FIG. 4 is a flow diagram illustrating a process for determining a net worth of a user and determining a value of user data;
FIG. 5 is a flow diagram illustrating a process for preventing duplicate user data;
FIG. 6 is a flow diagram illustrating a process for notifying a user of an analysis of user data;
FIG. 7 is a flow diagram illustrating a process for searching user data;
FIG. 8 is a flow diagram illustrating a process for bidding for user;
FIG. 9 is a flow diagram illustrating a process for ranking solutions of user data;
FIG. 10 is a flow diagram illustrating a process for contributing to user; and
FIG. 11 is a flow diagram illustrating a process for bidding for user data.

Embodiments of the systems and methods for managing user data disclosed are discussed in terms of user data in general and more specifically to user data as it relates to various types of intellectual property. However, the systems and methods for managing user data can apply to other forms and types of electronic data created by users.

It will be appreciated that this invention is not limited to the specific devices, methods, conditions or parameters described and/or shown herein. Also, as used in the specification and including the appended claims, the singular forms "a," "an," and "the" include the plural, and reference to a particular numerical value includes at least that particular value, unless the context clearly dictates otherwise. Ranges may be expressed herein as from "about" or "approximately" one particular value and/or to "about" or "approximately" another particular value. When such a range is expressed, another embodiment includes from the one particular value and/or to the other particular value. Similarly, when values are expressed as approximations, by use of the antecedent "about," it will be understood that the particular value forms another embodiment. It is also understood that all spatial references, such as, for example, horizontal, vertical, top, upper, lower, bottom, left and right, are for illustrative purposes only and can be varied within the scope of the disclosure.

As described herein, there is provided a platform for valuing an intellectual portfolio based on peer-ranking and a two-way trading system where users can trade user data to develop a more congruent portfolio of contributions to stand out to potential recruiters and investors. A system and method ascribe a value to each idea contribution or user data based on its peer ranking. The more contributions made within a particular category, the higher the potential value of a top ranked entry would be. This method and system of valuing intellectual contributions as more contributions are made provides for a top peer-ranked entry generating a higher value.

The systems and methods described provide a platform for users to trade intellectual contributions within their portfolio with other users. A balance due by a user can be made with virtual money that does not exceed the value of the user's existing portfolio and/or real world cash. While each of the user data is valued according to its peer-rank, the system and method allows trading to take place according to negotiations that are entirely at a user's discretion, which allows a trade to go through as long as both parties agree on a price. If a user has a portfolio value that is less than the virtual cash they have owing, the portfolio can be subject to automatic auction until their portfolio value once again exceed their virtual cash.

A two-way trading/bidding/auction system is described. The systems and methods provide users to modify user data of other users and if the modified user data is ranked higher on the peer-ranking system and thus ascribed a higher virtual cash value, then the two users, both the original user and the add-on user can bid for the parts of the modified user data to settle final ownership. The two way-open bidding/auction system provided by the present invention allows a user to either buy off the other user's stake in the modified creation or to sell off one's own stake. The original user and the add on user can also remain co-owners of the modified user data, or both parties can agree to sell off the modified user data to a third party, either in auction or privately.

The systems and methods described provide a platform in which users with negative virtual cash have their portfolio placed on an auction automatically where other users can make bids for the portfolio. Users cannot bid virtual currency for another user's intellectual portfolio that exceeds the user's current portfolio value in order to preserve a fair balanced system. Users are allowed to convert real world currency to virtual currency that can be used to purchase the portfolio of other users.

The systems and methods described provide a platform wherein, when a user logs on, the system or method informs the user of their virtual wealth based on the net worth of their intellectual portfolio and how much they have risen or fallen in the rankings.

The systems and methods described provide interesting anecdotal highlights about the users and the user data. For example, the system and method can provide such anecdotal information as Spanish based users have submitted more food recipes than users from any other geographical areas.

The systems and methods described provide a platform to suggest new ideas for users to act on. For example, a user can request a game wherein a caterpillar eats up other bugs, request a specific music video, or request a new mobile phone application. The requesting user can specify an amount to pay for such a product or use the auction system to negotiate a price.

The systems and methods described herein provide an open platform where users can showcase their talent (originality) or innovative capabilities and reach out to other users who appreciate their intellectual creations, for example, recruiters and investors. Instead of having job seekers having to fit themselves into a template to market to recruiters, the present invention allows the users to showcase themselves in a novel manner. The peer ranking allows employers and fund managers to quickly access how popular an idea is based on feedback from other users.

The systems and methods described provide a platform wherein users can submit problems and request solutions therefore. Users are encouraged to submit solutions to these problems and then rank the submitted solutions based on various factors, for example, on their practicality and ingenuity. Users can then be ranked based on how the other users rank the solutions. Users with the most practical and ingenious solution are ranked higher. This ranking system is a form of a reward and enables users to stand out from their peers. In addition, the systems and methods provide for users to submit their resumes so employers can browse the platform as a recruiting tool for new talent, or fund managers looking for new ideas in which to invest. Users are also allowed to submit new startup ideas and required funding so other users can vote on which startup is the most promising, and allow professional investors to sort out popular startup ideas.

The systems and methods described provide a platform wherein subsequent users are allowed to submit other original or technical work to the system for ranking such as blogs, video files, games, music clips, etc. These could attract the attention of employers in the media and gaming industry. Users who submit fashion designs could attract the notice of fashion labels. User can create new categories and/or subcategories for a product, for instance widget XYZ, that performs a certain function and then submit their design to achieve that function or submit designs for existing product categories and/or subcategories.

The systems and methods described herein provide a platform that will recognize duplicate entries so that only original work or at least innovative work can be submitted.

The systems and methods described herein provide a platform wherein a database of funds and recruiters can alert the funds or recruiters to invite them to view user data.

In addition, the systems and methods described herein provide a platform for users to message each other and form collaborative online groups that enables teleconferencing to work on the projects simultaneously. Group submissions are also allowed and will clearly identify all individual users of the group.

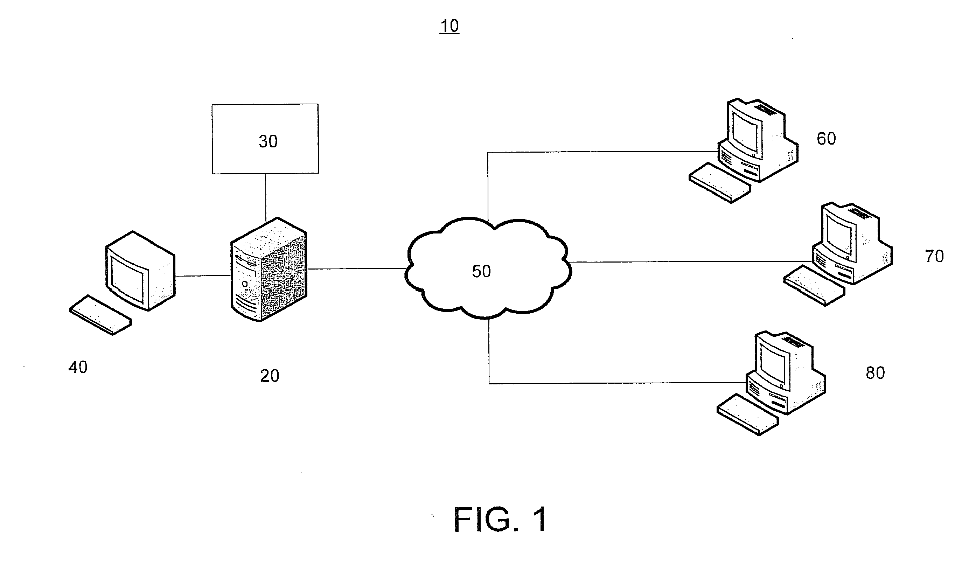

Systems and methods for managing user data, related components and exemplary methods of employing the systems and methods for managing user data are now described. FIG. 1 illustrates components of a system for managing user data 10.

The system 10 provides a platform to users to showcase their intellectual contributions for the purpose of peer-review in the form of peer-ranking. The system 10 also provides a platform for intellectual portfolio to be valued based on peer-ranking and provides a platform to users to trade their intellectual portfolio with one another. A two-way bidding/auction process is employed for collaborative work unless co-ownership of the collaboration can be agreed upon. The system 10 provides a platform for product placement in the form of prizes for top-ranked entries within each category.

The system 10 includes a processor 20, a memory 30 and input/output device 40. Input/output device 40 can include a keyboard and a display. Although system 10 is shown as including input/output device 40, input/output device 40 is not required for the operation of the system as described. Processor 20 is connected to a network 50 such as the Internet. Remote computers 60, 70, 80 are connected to the processor via network 50. Processor 20 controls the operation of the system 10.

Processor 20 receives user data from users 60-80 to network 50. Processor 20 stores the user data in memory 30. Processor 20 permits access to user data by remote users 60-80 for various functions and operations as described herein. Processor 20 performs various operations on user data, such as for example sorting, categorization, filtering, searching, etc. The user data can include any digital data, including, but not limited to, a process, machine, manufacture, composition of matter, literary work, musical work, dramatic work, pantomime, choreographic work, pictorial, graphic, sculptural work, motion picture, audiovisual work, sound recording, and architectural work.

The processor 20 manages and controls various processes as described below. The processor 20 provides an open system platform to show-case talent and innovative capabilities encompassing all fields that can be reduced to digital space. In addition, processor 20 incorporates a peer-ranking system by other users which may include experts in the field. Processor 20 provides an incentive/reward system to encourage participation and genuine contributions. Processor 20 includes algorithms designed to identify duplicate and similar user data; this process can also be conducted by human moderators. Processor 20 provides a global broadcast system to highlight the most popular and unique contributions periodically to its users and also to popular news media publications and outlets. Processor 20 permits prominent contributors in obtaining recognition, jobs or investments.

in addition, processor 20 provides a newsfeed system that updates users on how other users have fared since participating on the system, which encourages continued and increased participation by users. Processor 20 provides a feedback loop where other users are allowed to critique and give pointers to the user data and submissions of other users. Processor 20 identifies similar user data and suggests that users of the similar user data collaborate to further develop the user data. Processor 20 provides a platform for online collaboration such as teleconferencing and also a shared platform where users can edit and amend user data in a joint and shared manner; the online collaboration can provide means to measure the level of contribution by each of the collaborators; the collaborative work can be submitted to a peer-ranked system so the user data can be revalued, and an additional value can be the assigned to each user. Processor 20 provides a direct link to patent database searches. Processor 20 provides means for advertisers to advertise a product to users by offering products as prizes for top ranking users; processor 20 can provide a short product description of the prizes to incentivized user data improvement. Processor 20 provides a discussion tool to allow analysts to comment on the practicality of any contribution, as well as suggest cross-combination of ideas that may not be immediately obvious to its current users. Processor 20 provides a secure working and storage area for users to store their work-in-progress on the database prior to submitting it for ranking.

Additionally and/or alternatively, processor 20 provides a tool for fund managers and recruiters to specify criteria so as to identify user data from the system; searches based on category or value of idea can be provided. Processor 20 provides a talent bidding system for recruiters or fund managers who are interested in the same user data, which permits recruiters or fund managers to bid real money to entice a user to work for them or sell them the user data. Processor 20 provides a platform where during a bidding or auction process, other users are permitted to vote on whether the bid is too high or too low and whether the user should accept the bid or hold out; animation video and music can be provided by processor 20 to accompany the bidding process. Processor 20 can prequalify candidates and ideas and reduce the workload for recruiters and investors by ranking users on their peer-ranked contributions and also provide a mechanism for other users to comment on or recommend the users directly to recruiters or investors. Processor 20 provides a detailed trend analysis of each user's portfolio ranking fluctuations over time so users, recruiters and investors can monitor the performance of a user; a heat map of top rank movers can be generated and displayed.

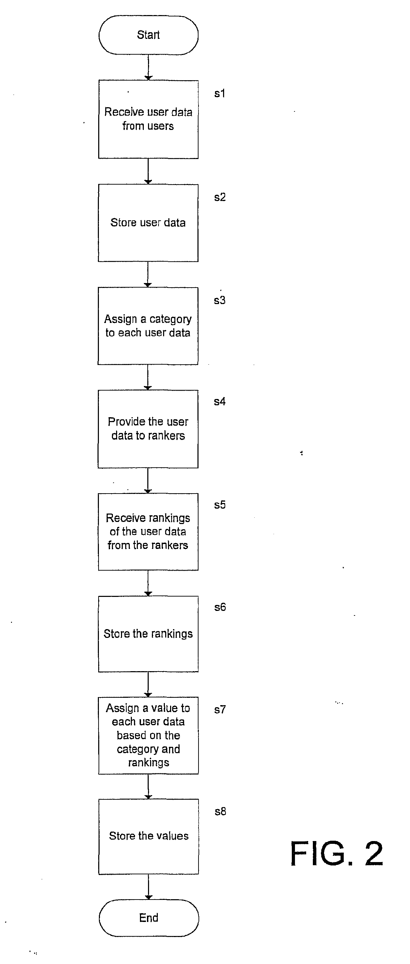

FIG. 2 is a flow diagram illustrating a process for valuing user data. In step s1, processor 20 receives a plurality of user data from a plurality of users. In step s2, processor 20 stores the user data in memory 30. In step s3, processor 20 assigns a category to each of the user data. Although the method describes processor 20 as assigning the category to the user data, the category can be assigned by the user when the user data is submitted to the processor 20. In step s4, processor 20 provides the user data to a plurality of rankers. The rankers are users other than the user of the user data to be ranked. The rankers receive and review the user data and provide a ranking of the user data.

For example, processor 20 can provide to a ranker a request for a ranking in the form of an input button or check box. If the ranker wishes to recognize the user data the ranker can click on the button or check the check box. The ranking can then be based on the total number of rankers who choose to recognize the user data. Other ranking systems are contemplated.

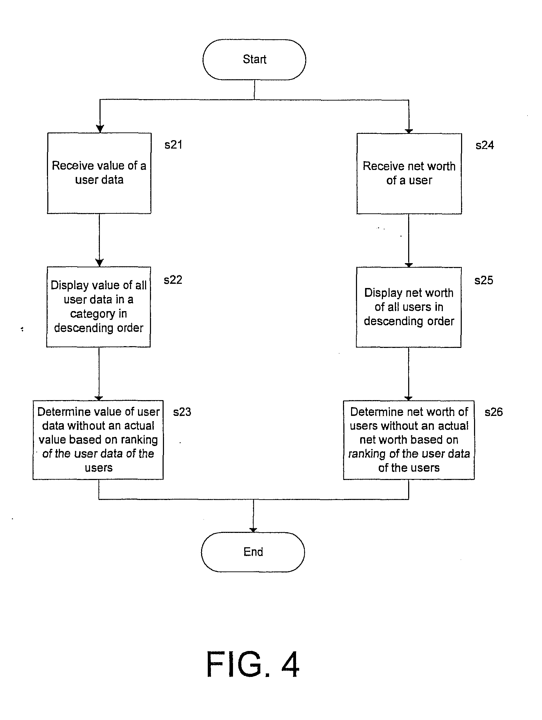

In step s5, processor 20 receives rankings from the rankers, and in step s6 stores the rankings in memory 30. In step s7, processor 20 assigns a value to each user based on the rankings and categories. One method of determining a value for each user data is as follows: if there is one contribution (i.e. user data) in a category, the system ascribes it a value of 1; if there are 2 contributions within the category, the system allocates a value of 2 to the higher ranked user data and 1 to the lower ranked user data; and so forth until all user data in a category for a particular user is valued. Thus the more contributions made within a particular category, the higher the potential value of the top ranked user data would be. In step s8, processor 20 stores the values in memory 30. Processor 20 can display the rankings on a display of a computer connected to the system, which will be described in further detail with respect to FIG. 4.

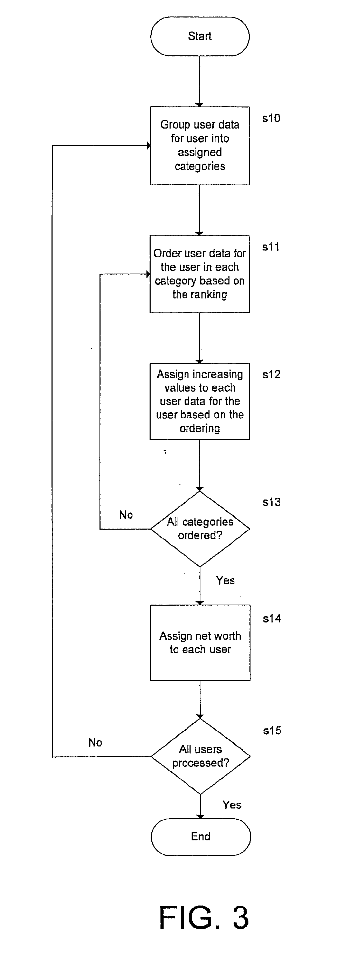

FIG. 3 is a flow diagram illustrating a process for assigning a net worth. The process described in FIG. 3 for assigning a value to the user data is performed on a user-by-user basis. In step s10, processor 20 groups the user data into the assigned categories, that is, the values of the user data are determined for all of the user data in a particular category.

The processes for determining a value for a user data can be based in part on whether a real world dollar value has or has not been associated with user data in a category.

If no real world values are available in a particular category, the top peer ranked user data in each category is opened to a valuation process wherein users are permitted to assign a real world dollar value to the user data; these values are received by processor 20. Processor 20 then determines an average of the values assigned to the top peer-ranked user data and assigns this average to the top-peer ranked user data. This particular top peer ranked user data keeps its user-assigned value until a real world transaction has occurred for at least one of the user data in a category (a process to be described herein in further detail below). If the top peer ranked user data losses its top ranking in a category, processor 20 submits the new top peer ranked user data to the user valuation process described above to assign a value to the new top peer ranked user data in a category. All user data that have previously occupied the top peer ranking can remain eligible for users to assign a value. All user-assigned values, which by their nature are dynamic since it is the consensus of the various user-assigned valuations, are maintained until a real world transaction occurs.

If one real world value is available in a category, processor 20 bases the valuation of the user data in a category on a scaled value using the top peer ranked user data value and the actual real world value. That is, processor 20 determines values for each user data in a category using the top peer ranked user data value and the real world value of a user data. Processor 20 ranks the user data between the higher of the peer ranked value and the real world value based on a scale value based in part on user data rankings in the category.

If more than one real world value is available in a category, processor 20 bases the valuation of the user data in a category using the more than one real world values as references. As more real world values that are available, processor 20 can compute an average of the variances of the total the number of real world values and apply this average as the scale to the user data.

Then, in step s11, processor 20 orders the user data based on the rankings of the user data. At this point in the process, user data of a particular user in a particular category are sorted based on the rankings. In step s12, processor 20 assigns increasing values to each user data based on the ordering. The process continues in step s13 until all user data of a particular user in each category is processed. Then, in step s14, processor 20 assigns a net worth to a particular user based on the values of all user data of that particular user. For example, the values of all of the user data of a particular user are totaled and the total is that user's net worth. Other net worth valuation processes are contemplated.

The process still continues in step s15 until all users are processed. Processor 20 can store the values in memory 30. At this point in the process, all of the user data has been assigned a value. Processor 20 can display the values on a display of a computer connected to the system, which will be described in further detail with respect to FIG. 4.

FIG. 4 is a flow diagram illustrating a process for determining a value of user data and determining a net worth of a user.

In step s21, processor 20 receives an actual value of a user data. The actual value can be retrieved from memory 30. In step s22 processor 20 displays the values of all user data in a category in descending order. In step s23, processor 20 determines the value of user data without an actual value based on the ranking of the user data of the users. The process for determining the value of user data without an actual value is continued for all user data without a value.

In step s24, processor receives an actual net worth of a user. The actual net worth can be retrieved from memory 30. In step s25, processor 20 displays the net worth of all users in descending order. In step s26, processor 20 determines the net worth of users without an actual net worth based on the ranking of the user data of the users. The process for determining the net worth of users without an actual net worth is continued for all users without a net worth.

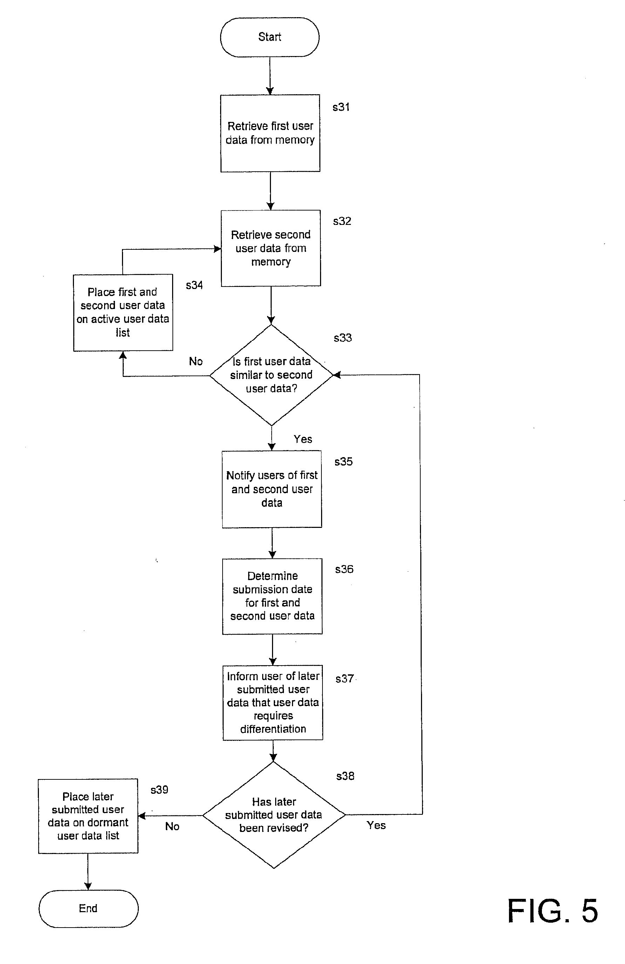

FIG. 5 is a flow diagram illustrating a process for preventing duplicate user data. In step s31, processor 20 retrieves a first user data from memory. In step s32, processor 20 retrieves a second user data from memory 30. In step s33, processor 20 compares the first user data to the second user data to determine if the first user data is similar to the second user data.

For example, processor 20 can compare keywords, phrases, diagrams, charts and/or pictures of the user data to determine if similarities exist. A system moderator could also provide analysis for determining similarities, either before or after processor 20, or even without processor 20. If processor 20 determines similarities, a moderator would review the results and determine whether to inform the users of similar user data of possible deletion unless modifications are made to the user data to remove them from the similar determination. Users are permitted to submit arguments as to why the user data should not be classified as similar.

If the first and second user data are not similar, in step s34 processor 20 places the first and second user data on an active user data list and the process returns to step s32 to retrieve another second user data. An active user data list indicates that the user data is not similar to other user data and thus would be available to all processes on the system.

If the first and second user data are similar, in step s35, processor notifies the users of the first and second user data that the user data are similar. In step s36, processor 20 determines a submission date of both the first and second user data. In step s37, processor 20 informs the user of the later submitted user data that the later submitted user data requires differentiation from the earlier submitted user data. In step s38, processor 20 determines if the later submitted user data has been revised. If the later submitted user data has been revised, processor 20 returns to step s33 to determine if the later submitted user data is similar to the earlier submitter user data, i.e. if the later submitted user data has been differentiated from the earlier submitted user data. If the later submitted user data has not been revised, in step s39 processor 20 places the later submitted user data on a dormant user data list. User data on the dormant user data list indicates that the user data remains similar to other user data and therefore is not available to other processes on the system; e.g. will not be displayed in user data lists, not used in determining user net worth, etc.

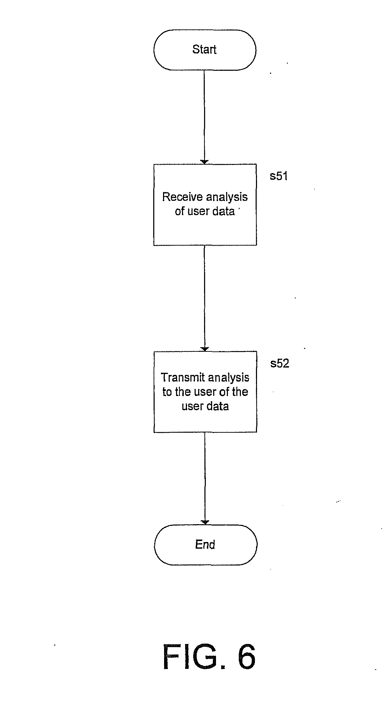

FIG. 6 is a flow diagram illustrating a process for notifying a user of an analysis of user data. In step s51, processor 20 receives an analysis of a user data from a user other than a user of the user data. This analysis can be a critique, a recommendation, improvement, etc. In step s52, processor 20 transmits the analysis of the user data to the user of the user data.

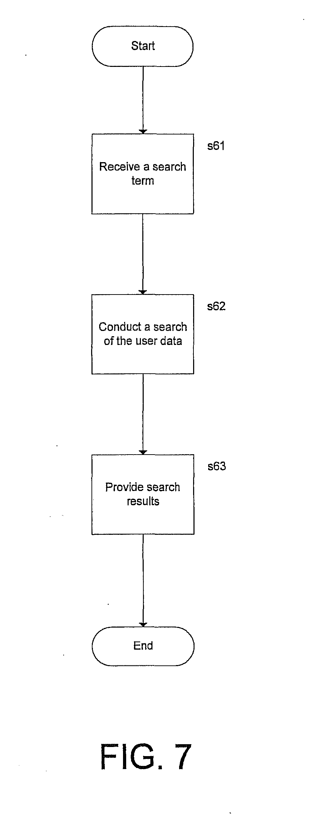

FIG. 7 is a flow diagram illustrating a process for searching user data. In step s61, processor 20 receives a search term. The search term is received from a user or searcher wishing to search for particular user data. For example, an investor might be interested in some new technology in which to invest. The system can include a search engine to handle the request or outsource the search engine functions to a third party search engine. In step s62, the search of the user data is conducted based on the search term. In step s63, processor 20 provides the search results to the searcher. The search results can be displayed on a local or a remote computer.

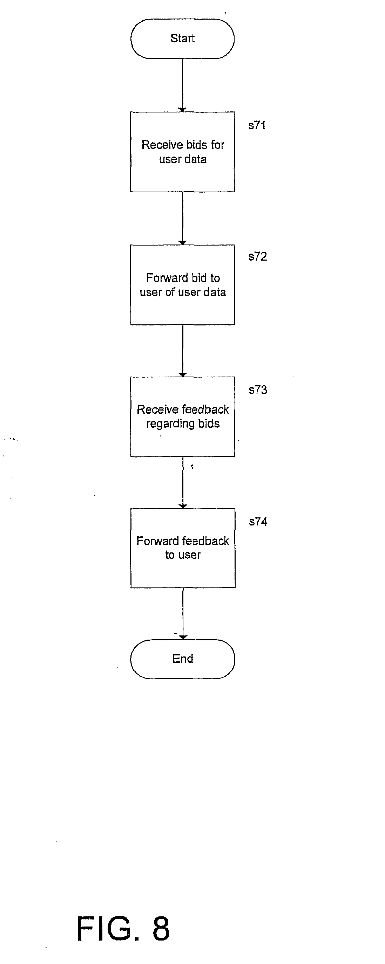

FIG. 8 is a flow diagram illustrating a process for bidding for user data. In step s71, processor 20 receives bids for user data. The bids are preferably received from users other than the user of the user data being bid on. The bidders can also be investors or entrepreneurs looking for investment prospects. In step s72, processor 20 forwards the bid to the user of the user data. The bids are by default made public to all users, although the systems and methods herein contemplate a private bidding process as well. In step s73, other users provide feedback regarding the viability of the bid. For example, one of the other users might think the bid too low and inform the user of the user data of that fact. In step s74, the feedback is forwarded to the user of the user data. The user of the user data being bid on is free to accept or reject the bids.

Other processes for transferring ownership of user data are contemplated. For example, the systems and methods described herein can provide a platform for the direct purchase of user data from a user. Also, a purchase can be based on a trade of one user data of a first user for another user data of a second user, and if the trade is not an equal trade, as determined by the users of the user data to be traded, additional compensation can be provided to account for a difference in a value of the first user data and the second user data. This additional compensation can be made in virtual cash, limited to a user's net worth, and/or real world currency. Other systems are contemplated.

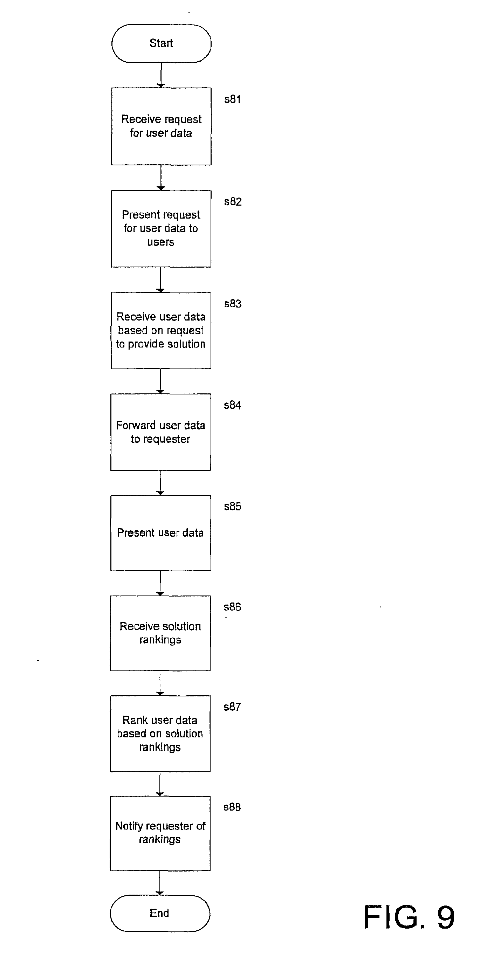

FIG. 9 is a flow diagram illustrating a process for ranking solutions of user data. In this process, user data is specifically created based on a request from a particular user, i.e. a requester. The requester may be an investor or commercial entity looking for specific user data. For example, the requester may be requesting a particular smart phone application, or a jingle for a commercial. In addition, the requester may request a solution to a problem, such as, a request to solve world hunger, and users can supply possible solutions thereto. In step s81, processor 20 receives a request for user data. In step s82, processor 20 presents the request to the users. This presentation can be in the form of a general posting on the displays of the users, or can be in the form of an email sent to the users. In step s83, processor 20 receives user data created in response to and based on the request. In step s84, processor 20 forwards the user data to the requester. In step s85, processor 20 presents the user data to users so that the user data can be ranked based on how well the user data satisfies the request. Users can rank the user data, for example, based on practicality and/or ingenuity of user data in satisfying the request or providing a solution. In step s86, processor 20 receives the solution rankings. In step s87, processor 20 ranks the user data based on the solution rankings. For example, processor 20 can provide a request for ranking and rankers can submit a ranking, e.g. based on a click on a button provided to a ranker, and total the number of rankings received to determine the rank of the user data. In step s88, processor 20 notifies the requester of the solution rankings. Thus the requester can quickly have a peer review of the solutions presented via the user data. The rankings can also be displayed to all users.

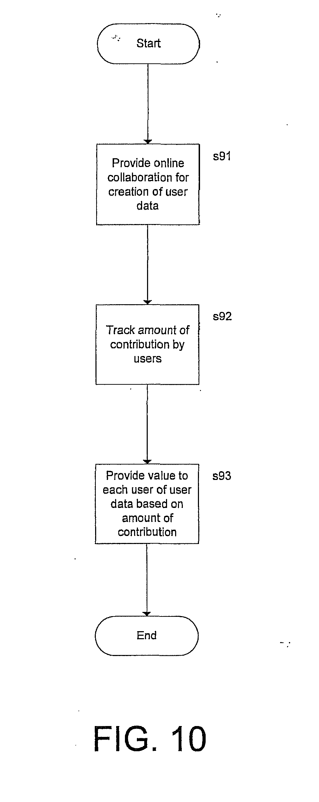

FIG. 10 is a flow diagram illustrating a process for contributing to user data. In step s91, processor 20 provides an online collaboration area for the creation of user data by multiple users. For example, this online collaboration area can be a whiteboard area or teleconferencing system. During the collaboration, processor 20 tracks the amount of contribution by each of the collaborating users in step s92.

For example, after a user data has been ranked and valued on the system, other users can submit improvements or modifications to the original user data submission. Processor 20 can then provide for users to award points to one of the modified versions or the original but not allow points to be awarded to all of them. This is to allow processor 20 to rank a user preference for the original user data versus the modified user data. Processor 20 notifies users when there has been modification of user data. Processor 20 displays the modified and original version of the user data to make it easier for the voters to choose between them in awarding their votes. To prevent the occurrence of too many modifications cluttering the system, processor 20 can limit how many modifications are to be received or displayed per user data. To facilitate such a limit, for example, when the number of modifications submitted exceeds a pre-determined threshold, processor 20 can provide a time window wherein votes are to be received and those modifications that do not receive a certain number of votes can be deleted from the process by processor 20. While this may be the case, the owner of the modified user data still retains all modifications for future and further modifications, if desired.

In step s93, processor 20 provides a value to each user of the user data based on the amount of the contribution by the user. This process can provide a basis of compensation if and when the user data is sold or traded. For example, if an original user data of a first user is valued at $500,000 and a second user modifies the user data to created modified user data which is valued at $750,000, then the modified user data will be displayed and the first user is credited with $500,000 and the second user is credited with $250,000 for net worth purposes. The first and second users can trade, sell or co-own the modified user data.

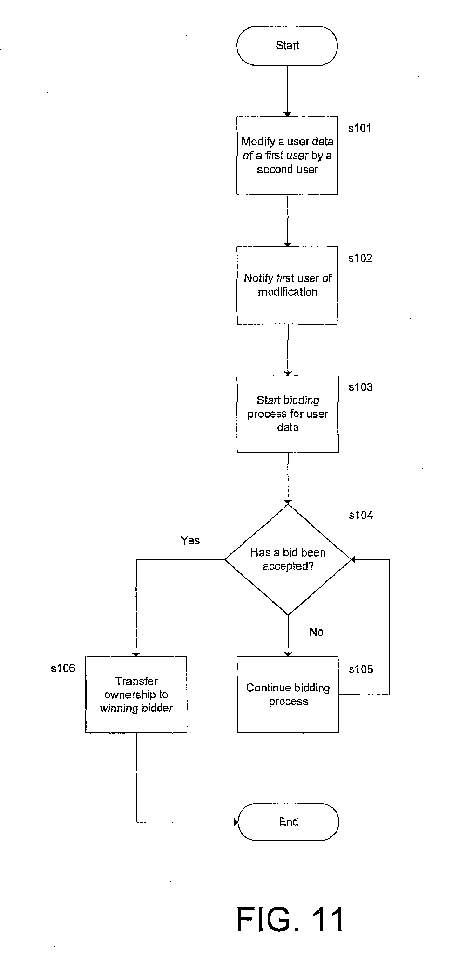

FIG. 11 is a flow diagram illustrating a process for bidding for user data. It is contemplated that the systems and methods described herein can provide a platform wherein user data created by a first user can subsequently be modified or improved by a second user. In step s101, processor 20 receives a modification to a user data. In step s102, the first user is notified of the modification. In step s103, processor 20 starts a bidding process between the user and modifier of the user data. In step s104, processor 20 determines if a bid has been accepted. If a bid has not been accepted, in step s105, processor 20 continues the bidding process. If a bid is accepted, in step s106, processor 20 transfers ownership of the user data and modification to the winning bidder.

Processor 20 can also provide for the receipt and display of user feedback by users that have reviewed user data. This is especially useful since some users may have preferences on how an existing user data should evolve/progress, but may not have the motivation or know-how to improve/modify the existing user data. While this may be the case, the feedback will enable others users to utilize the feedback to provide improvements and/or modifications for the user data. The user feedback can be displayed in chronological order with the newest feedback on top and the oldest feedback at the bottom. Processor 20 can also provide for the receipt of votes on which feedback is the most appropriate and processor 20 can award a point to each user who submits feedback. Processor 20 totals the points and the user feedback are then displayed based on their totals with the highest number of points awarded displayed at the top.

Processor 20 can also provide a legal disclaimer to inform users of the legal implications of submitting their user data. The legal disclaimer can relate to patent rights, copyright rights, trademark/service mark rights, etc. Processor 20 can also provide some further assistance to users who are interested in investigating further into protection for their user data. For example, processor 20 can inform a user, e.g. an interior decorator, who wishes to submit user data, e.g. pictures of furniture arrangements, of possible protections available for that user data. Processor 20 can inform the user of the possible rights and/or protections prior to final submission of the user data. In addition, processor 20 can provide video demonstrations in different languages to explain the rights and/or protections available. Processor 20 can also provide links to outside resources, e.g. The United Stated Patent and Trademark Office or affiliated patent attorneys, for users to contact.

Processor 20 can also provide a registered user with free disk storage space using a cloud-computing framework to store their user data or random thoughts as they develop before the user is ready for posting. Processor 20 can provide a notepad-type template that will assist the users in developing their ideas as they come along. Also, processor 20 can provide a system where users can submit their ideas to improve the system and process itself to customize their experiences.

As described herein, the present invention provides a platform for valuing an intellectual portfolio of a user based on peer-ranking and a two-way trading system where users can trade user data to develop a more congruent portfolio of contributions to stand out to potential recruiters and investors. It is also contemplated that the systems and methods described herein can provide any written agreements required to finalize any transactions or transfer of user data described herein based on the terms agreed to by the parties. In addition, the present disclosure envisions a computer program device readable by a machine, tangibly embodying a program of instructions executable by the machine to perform methods disclosed herein.

It will be understood that various modifications and alterations may be made to the embodiments as described and illustrated within the scope of the accompanying claims.

## Claims

1. A method for valuing user data, comprising the steps of:
receiving a plurality of user data from a plurality of users;
storing the user data in a memory,;
assigning a category to each user data;
providing the plurality of user data to a plurality of rankers;
receiving rankings for the user data from the rankers;
storing the rankings in the memory;
assigning a value to each user data based on the rankings and categories; and
storing the values in memory.

2. A method as claimed in Claim 1, wherein the step of assigning a value to the user data comprises:
for each user:
grouping the user data for the user into assigned categories;
ordering the user data in each category based on the ranking of the user data;
assigning increasing values to each user data based on the ordering; and
repeating for the user the ordering and assigning steps for each category.

3. A method as claimed in Claim 1 or Claim 2, further comprising:
determining if an actual value of a user data in a category exists in the memory;
if an actual value of a user data does not exist:
requesting users to assign a value to a top ranked user data in a category;
averaging assigned values to obtain an average value; and
using the average value and the rankings to scale the values of the user data in the category;
if one actual value exists:
using the one actual value and the scale of values computed before the actual value existed to re-scale the values of the user data in the category; and
if more than one actual values exist:
averaging the more than one actual values to obtain a average actual value; and
using the average actual value and the rankings to scale the values of the user data in the category.

4. A method as claimed in any preceding claim, further comprising assigning a net worth to each user based on a total value of the user data for the user,
the method further comprising:
retrieving an actual net worth of users from the memory; and
determining an actual net worth for a user without an actual net worth based on the actual net worth of users retrieved from the memory and the rankings of user data of the user without a net worth.

5. A method as claimed in any preceding claim, further comprising:
comparing a first user data to a second user data; and
determining if the first user data and the second user data are similar.

6. A method as claimed in Claim 5, wherein the comparison is based on a comparison of at least one of a keyword, phrase, diagram, chart and picture of the first user data and of the second user data, and
wherein the method further comprises:
if the first user data and the second user data are determined not to be similar, placing the first user data and the second user data on an active user data list; and
if the first user data and the second user data are determined to be similar, the method further comprises:
a) determining a submission date for the first user data and the second user data;
b) informing a user of the later submitted user data that the later submitted user data requires differentiation from the earlier submitted user data;
c) determining if the later submitted user data has been revised;
d) if the later submitted user data has been revised, determining if the revised user data is similar to the earlier submitted user data and returning to step b) if the later submitted user data is similar to the earlier submitted user data; and
e) if the later submitted user data has not been revised, placing the later submitted user data on a dormant user data list.

7. A method as claimed in any preceding claim, further comprising:
receiving an analysis of a user data of a user from an analyzer; and
transmitting the analysis of the user data to the user.

8. A method as claimed in any preceding claim, further comprising:
receiving a search term from a search requester;
conducting a search of the plurality of user data for user data satisfying the search term; and
providing search results to the search requester.

9. A method as claimed in any preceding claim, further comprising:
receiving from bidders bids for a user data of a user; and
forwarding the bids to the user of the user data, and
receiving from other users feedback regarding the bids; and
forwarding the feedback to the user of the user data.

10. A method as claimed in any preceding claim, wherein a user data was created based on a submitted request for user data,
the method further comprising:
presenting the user data to a plurality of users;
receiving from the plurality of users solution rankings of the user data; and
ranking the user data based on the solution rankings.

11. A method as claimed in any preceding claim, wherein the user data is at least one of a process, machine, manufacture, composition of matter, literary work, musical work, dramatic work, pantomime, choreographic work, pictorial, graphic, sculptural work, motion picture, audiovisual work, sound recording, and architectural work.

12. A method as claimed in any preceding claim, further comprising:
receiving feedback relating to user data;
forwarding the feedback to a user of the user data;
displaying the feedback to other users;
receiving ranking of the feedback from the other users; and
displaying the feedback based on the rankings of the feedback.

13. A method as claimed in any preceding claim, further comprising:
modifying an original user data of a first user by a second user, said original user data having an original value;
determining a modified value of the modified user data; and
determining a value of the modified user data attributable to the second user based on the difference between the original value and the modified value.

14. A system for valuing user data, comprising:
a processor arranged to receive a plurality of user data from a plurality of users, store the user data, assign a category to each user data, provide the plurality of user data to a plurality of rankers, receive rankings for the user data from the rankers, store the rankings, assign a value to each user data based on the rankings and categories, and store the values; and
a memory for storing the user data, the rankings and the values.

15. A system as claimed in Claim 14 for valuing user data, the system being arranged to perform a method as claimed in any of Claims 1 to 13.
